# EUROPÄISCHE PATENTANMELDUNG

(11) **EP 1 728 833 A1**
(43) Veröffentlichungstag der Anmeldung: **06.12.2006**
(21) Anmeldenummer: 06010648.1
(22) Anmeldetag: 24.05.2006
(51) Int. Cl.: C09C 1/00

(54) **Verfahren zur Oberflächenbehandlung von Polymer-Formteilen**

(30) Priorität: 04.06.2005 DE 102005025730
(71) Anmelder: Fraunhofer-Gesellschaft zur Förderung der angewandten Forschung e.V., 80686 München (DE)
(72) Erfinder: Götz, Joachim, Dr., 83064 Raubling (DE); Eisenreich, Norbert, Dr., 76327 Pfinztal (DE); Becker, Wolfgang, Dr., 76131 Karlsruhe (DE); Geissler, Adam, Dr., 76698 Karlsdorf-Neuthard (DE)
(74) Vertreter: Lenz, Steffen

(57) **Zusammenfassung**

Es wird ein Verfahren zur Oberflächenbehandlung von Polymer-Formteilen, wie dreidimensionalen Körpern, Folien etc., aus zumindest in einem oberflächennahen Bereich mit partikulären Feststoffen versetzten Polymeren oder Polymersystemen vorgeschlagen. Um eine hohe Partikelkonzentration in den oberflächennahen Randbereichen des Polymer-Formteils zu erzeugen, ist erfindungsgemäß vorgesehen, daß in wenigstens einen flüssigen bzw. viskosen, plastifizierten oder gelösten Oberflächenbereich des Polymer-Formteils Ultraschall mit einer hinreichenden Energie eingekoppelt wird, um einen Stofftransport zumindest einiger Partikel in Richtung der Oberfläche des Polymer-Formteils zu induzieren, Agglomerationen kleinerer Partikel zu lösen und/oder größere Partikel zu kleineren Partikeln zu zerteilen.

## Beschreibung

Die Erfindung betrifft ein Verfahren zur Oberflächenbehandlung von Polymer-Formteilen aus wenigstens einem zumindest in einem oberflächennahen Bereich mit partikulären Feststoffen versetzten Polymer oder Polymersystem. Sie ist ferner auf eine Vorrichtung zur Durchführung eines solchen Verfahrens gerichtet.

Werkstoffe auf der Basis von mit partikulären Feststoffen, wie Füllstoffen, Wirkstoffen, Farbstoffen, Pigmenten, Verstärkungsfasern und dergleichen, versetzten Polymeren und Polymersystemen, wie Polymer-Blends bzw. Polymermischungen, Polymerlösungen oder -suspensionen, wie beispielsweise wäßrigen Systemen mit Hydrokolloiden/Biopolymeren, z.B. Polysacchariden (z.B. Zellstoff bzw. Cellulose in Papiermassen) und dergleichen, finden in vielen Anwendungsgebieten ihren Einsatz. Neben faserförmigen Feststoffen, welche vornehmlich einer Erhöhung der Festigkeit und Zähigkeit polymerer Werkstoffe dienen, seien beispielhaft Feinpartikel erwähnt, welche für verbesserte Barriereeigenschaften des Polymers sorgen, so daß sie weitestgehend undurchlässig für Gase, insbesondere Sauerstoff, werden. Bei solchen Feststoffen handelt es sich z.B. um feinpartikuläre Schichtsilikate, Calciumcarbonat (CaCO₃), Glas etc., welche vorzugsweise in feinpartikulärer Form, d.h. im Mikrometerbereich bis in den Nanometerbereich, für Verpackungsmaterialien und -behälter für hygienisch anspruchsvolle Waren, wie Lebensmittel, Pharmazeutika und dergleichen, eingesetzt werden. Überdies sind insbesondere solche Feinpartikel von Vorteil, welche ein gewisses Sauerstoffaufnahmevermögen besitzen, wie z.B. Natriumsulfit (Na₂SO₃), Eisen (II) hydroxid (Fe(OH)₂), Ascorbinsäure bzw. Vitamin C etc., um in das Polymer eindringende Sauerstoffmoleküle "wegzufangen". Für denselben Zweck, aber auch für andere Anwendungsfälle, wie z.B. für Textilien, Fasern, Türgriffe, Handläufe etc., können ferner partikuläre Feststoffe zum Einsatz kommen, welche eine antibakterielle bzw. biozide Wirkung entfalten, wie Partikel aus Silber (Ag), Titandioxid (TiO₂) oder dergleichen. Wiederum sind Feinpartikel von Vorteil, um für eine hohe wirksame Partikeloberfläche zu sorgen. Des weiteren finden leitfähige Partikel, z.B. aus Ruß, Graphit, Metallen etc., für leitfähige Polymer-Formteile Verwendung, wie Elektrodenplatten, z.B. für Brennstoffzellen, Batterien und Akkumulatoren, Abschirmungen etc. Darüber hinaus sind Flammschutzmittel für Polymer-Formteile in Form von konstruktiven Bauteilen bekannt, z.B. aus Silikaten, Bromiden etc., welche ebenfalls zweckmäßig in feinpartikulärer Form eingesetzt werden, um eine große wirksame Oberfläche zu bieten. Ein weiteres Anwendungsgebiet stellen polymergebundene Treib- und Explosivstoffe, insbesondere sogenannte Festtreibstoffe, dar. Des weiteren können durch die insbesondere oberflächige Zugabe von Partikeln die optischen Eigenschaften von Polymer-Formteilen beeinflußt werden, was nicht nur durch einen Zusatz von partikulären Farbstoffen, Pigmenten und dergleichen, sondern z.B. auch durch Licht reflektierende Metallpartikel geschehen kann. Ferner sind reibungsvermindernde Partikel, z.B. aus Polytetrafluorethylen (PTFE) denkbar. Darüber hinaus sind katalytisch wirksame Partikel, insbesondere aus Metallen oder deren Metalloxiden, wie Platin (Pt), Palladium (Pd), Ruthenium (Ru), Rhodium (Rh) etc., für polymergebundene Feststoffkatalysatoren bekannt. Überdies ist eine Steigerung der Härte mit harten Partikeln, z.B. aus Siliciumdioxid (SiO₂) Industriediamant etc., möglich.

Von Interesse ist im allgemeinen eine möglichst homogene, feindisperse Verteilung der Partikel in der Polymermatrix, insbesondere im Bereich der Oberfläche der Polymer-Formteile, damit die Partikel ihre ihnen zugedachte Wirkung - sei es eine weitestgehend undurchlässige Gasbarriere, eine antibakterielle oder katalytische Wirkung, eine gute Leitfähigkeit, eine optisch einwandfreie oder modifizierte Oberfläche etc. - entfalten können. Bei der Einarbeitung der Partikel in flüssige bzw. viskose, plastifizierte oder gelöste Polymersysteme besteht indes das Problem, daß die Partikel zur Bildung von Agglomerationen neigen, so daß eine homogene, feindisperse Verteilung der Partikel nicht ohne weiteres erreicht werden kann. Dieses Problem nimmt mit sinkender Partikelgröße noch zu, wobei sich insbesondere Feinpartikel im Bereich zwischen wenigen Nanometern mit einigen Mikrometern bevorzugt aneinander anlagern.

Um diesem Problem zu begegnen und in ein plastifiziertes Polymer eindispergierte Partikel möglichst gleichmäßig zu verteilen, ist beispielsweise die Anwendung von Ultraschall bekannt (WO 03/055 939 A1).

Ferner ergibt sich insbesondere im Falle eines hohen Füllgrades des Polymers mit Partikeln praktisch immer eine Verarmung der Partikel im Randbereich des erzeugten Polymer-Formteils, was häufig auf die Wirkung der Wandung eines Extruders, einer Strangpresse, einer Spritzgießform, eines beliebigen anderen Formwerkzeugs oder dergleichen, zurückzuführen ist, welches zur Verarbeitung des noch im flüssigen bzw. viskosen, plastifizierten oder gelösten Zustand befindlichen, mit Partikeln versetzten Polymers eingesetzt wird. Dabei beträgt die Partikelkonzentration unmittelbar am Rand des Polymer-Formteils annähernd null und steigt in einem Randbereich des Polymer-Formteils auf einen - bei homogener Durchmischung - annähernd konstanten Wert im Innern des Polymer-Formteils an. Trägt man beispielsweise die Partikelvolumenkonzentration eines hochgefüllten Extrudates über den Durchmesser eines Extruders auf, so ergibt sich eine im wesentlichen trapezförmige Kurve, wobei die konvergierenden Seiten des Trapezes innerhalb einer äußeren Grenzschicht von einer Konzentration von null unmittelbar an den Wandungen des Extruders bis auf einen im wesentlichen konstanten Wert, welcher der Höhe des Trapezes entspricht, ansteigen. Die Steigung sowie die Dicke dieser Grenzschicht hängen vornehmlich von der Größe der eingesetzten Partikelgrößenfraktionen ab. In vielen Fällen, wie auch in den vorgenannten Anwendungsgebieten von mit partikulären Feststoffen gefüllten Polymer-Formteilen, ist aber gerade (auch) am Rand des Formteils eine hohe Konzentration und eine möglichst feindisperse Verteilung der Partikel in der Polymermatrix erwünscht. Andererseits ist es häufig insbesondere dann, wenn die jeweils vorgesehenen Füllpartikel, z.B. funktionelle Partikel der oben genannten Art, relativ teuer und/oder als solche umweltschädlich sind, erwünscht, nur möglichst geringe Mengen an Partikeln einzusetzen, welche insbesondere im oberflächigen Bereich des Polymer-Formteils wirksam sein sollen.

Die US 4 793 954 A beschreibt ein Verfahren zur Verbesserung der Verarbeitbarkeit von strukturviskosen, thermoplastischen Polymerschmelzen durch Einkopplung von Ultraschall in die Schmelze zur Erniedrigung deren Viskosität, wobei es auch möglich ist, der Polymerschmelze Füll- oder Verstärkungsfasern zuzusetzen, wobei das Aufnahmevermögen der Schmelze für die Fasern infolge ihrer verringerten Viskosität verbessert wird. Was die Verarmung eines aus einer solchen Schmelze erzeugten Polymer-Formteils - sei es durch Spritzgießen oder sei es durch Extrudieren - an Füllstoffen im oberflächigen Randbereich desselben betrifft, so gilt indes das im vorherigen Absatz gesagte.

Schließlich ist die Anwendung von Ultraschall auch auf anderen Gebieten der Polymertechnik bekannt, ohne daß das Polymer mit Füllpartikel versetzt wird. So ist der US 5 039 462 A beispielsweise ein Verfahren zur Herstellung von biaxial orientierten Polymerfolien entnehmbar, indem eine im festen Zustand befindliche Polymerlage durch eine zwischen zwei Umformwerkzeugen angeordnete Deformationszone geführt wird, deren Breite reduziert wird, so daß die Polymerlage verschmälert wird. Bei der Umformung wird die zu bearbeitende Polymerlage auf einer Temperatur oberhalb ihrer Glasübergangstemperatur, aber unterhalb ihrer Schmelztemperatur gehalten. Wenigstens eines der Umformwerkzeuge wird dabei in Ultraschallschwingungen versetzt. Die Polymerlage kann ferner stromab der Umformung getempert werden, um innere Spannungen abzubauen.

Der Erfindung liegt die Aufgabe zugrunde, ein Verfahren zur Oberflächenbehandlung von Polymer-Formteilen der eingangs genannten Art vorzuschlagen, welches eine Erhöhung der Partikelkonzentration, insbesondere der Konzentration an Feinpartikeln, im Bereich der Oberfläche des Polymer-Formteils ermöglicht.

Diese Aufgabe wird erfindungsgemäß bei einem Verfahren der eingangs genannten Art dadurch gelöst, daß in wenigstens einen flüssigen bzw. viskosen, plastifizierten oder gelösten Oberflächenbereich des Polymer-Formteils Ultraschall mit einer hinreichenden Energie eingekoppelt wird, um einen Stofftransport zumindest einiger Partikel in Richtung der Oberfläche des Polymer-Formteils zu induzieren und/oder Agglomerationen kleinerer Partikel zu lösen und/oder größere Partikel unter Bildung von kleineren Partikeln zu zerteilen, wobei der flüssige bzw. viskose, plastifizierte oder gelöste Oberflächenbereich des Polymer-Formteils nach der Einkopplung von Ultraschall erstarrt wird.

Überraschenderweise wurde gefunden, daß sich durch die Einwirkung von Ultraschall in den oberflächigen, flüssigen bzw. viskosen Bereich des Polymer-Formteils eine Migration der Partikel aus einem weiter innen liegenden Bereich bis in den unmittelbaren Randbereich des Polymer-Formteils erzielen läßt, so daß der Partikelanteil in dem oberflächigen Bereich zunimmt und sich eine gleichmäßigere Partikelkonzentration im oberflächigen Bereich des Polymer-Formteils ergibt oder teilweise gar eine erhöhte Partikelkonzentration im Randbereich des Polymer-Formteils erzielen läßt. Dabei ist es insbesondere von Vorteil, wenn das Polymer-Formteil während der Einkopplung von Ultraschall zumindest an derjenigen - flüssigen bzw. viskosen - Oberfläche, auf welche der Ultraschall einwirkt, nicht mit einer an das Formteil anliegenden, flächigen Struktur in Kontakt gebracht, sondern der Ultraschall beispielsweise über einen Flüssigkeitsfilm und/oder über auf der Oberfläche des Formteils abrollende Walzen eingekoppelt wird, wie es nachfolgend näher erläutert ist. Dadurch kann die unerwünschte, vornehmlich strömungsinduzierte Verarmung an Feststoffpartikeln im Oberflächenbereich des Polymer-Formteils vermieden werden.

Ein weiterer erwünschter Effekt des erfindungsgemäßen Verfahrens besteht darin, daß oberflächennahe Agglomerationen von Partikeln gelöst werden können, wobei sich die Partikel in der umgebenden, flüssigen bzw. viskosen Polymermatrix verteilen können. Wie bereits erwähnt, ist dies insbesondere im Falle von Feinpartikeln, beispielsweise im nanoskaligen Bereich von etwa 1 bis 10 nm bis in den mikroskaligen Bereich von etwa 10 µm bis etwa 100 µm, von großer Relevanz, da solche Partikel bereits während der Einarbeitung in das Polymer zu Agglomerationen neigen.

Schließlich besteht noch ein zusätzlicher Effekt des erfindungsgemäßen Verfahrens darin, daß es bei Einstellung einer entsprechenden Leistung des Ultraschalls möglich ist, größere Partikel, welche sich im oberflächennahen Bereich des Polymer-Formteils bzw. innerhalb der Eindringtiefe des Ultraschalls befinden, zu kleineren Partikeln, gegebenenfalls Nanopartikeln, zu zerteilen, so daß sich solche Feinpartikel aus größeren Partikelgrößenfraktionen in situ erzeugen lassen. Dies stellt nicht nur im Hinblick auf die in der Regel hohen Kosten von Nanopartikeln, sondern auch auf die mit der Handhabung derselben auftretenden Probleme einen weiteren wichtigen Vorteil der Erfindung dar, welcher nicht nur in verfahrenstechnischer Hinsicht, sondern auch im Hinblick auf die Arbeitssicherheit von Bedeutung ist. Hierzu sei erwähnt, daß Nanopartikel ab einer Größe von etwa 25 nm oder kleiner im Verdacht stehen, aufgrund ihrer Lungengängigkeit oder gar Permeabilität durch die Zellmembran gesundheitsschädlich zu wirken. Auf diese Weise lassen sich mit partikulären Feststoffen gefüllte Polymer-Formteile in ihrem oberflächennahen Bereich mit einer Feinpartikelfraktion anreichern, ohne der Polymermatrix selbst Feinpartikel zusetzen zu müssen.

Ein weiterer erwünschter Effekt des erfindungsgemäßen Verfahrens besteht darin, daß oberflächennahe Agglomerationen von Partikeln gelöst werden können, wobei sich die Partikel in der umgebenden, flüssigen bzw. viskosen Polymermatrix verteilen können. Wie bereits erwähnt, ist dies insbesondere im Falle von Feinpartikeln, beispielsweise im nanoskaligen Bereich von etwa 1 bis 10 nm bis in den mikroskaligen Bereich von etwa 10 µm bis etwa 100 µm, von großer Relevanz, da solche Partikel bereits während der Einarbeitung in das Polymer zu Agglomerationen neigen.

Schließlich besteht noch ein zusätzlicher Effekt des erfindungsgemäßen Verfahrens darin, daß es bei Einstellung einer entsprechenden Leistung des Ultraschalls möglich ist, größere Partikel, welche sich im oberflächennahen Bereich des Polymer-Formteils bzw. innerhalb der Eindringtiefe des Ultraschalls befinden, zu kleineren Partikeln, gegebenenfalls Nanopartikeln, zu zerteilen, so daß sich solche Feinpartikel aus größeren Partikelgrößenfraktionen in situ erzeugen lassen. Dies stellt nicht nur im Hinblick auf die in der Regel hohen Kosten von Nanopartikeln, sondern auch auf die mit der Handhabung derselben auftretenden Probleme einen weiteren wichtigen Vorteil der Erfindung dar, welcher nicht nur in verfahrenstechnischer Hinsicht, sondern auch im Hinblick auf die Arbeitssicherheit von Bedeutung ist. Hierzu sei erwähnt, daß Nanopartikel ab einer Größe von etwa 25 nm oder kleiner im Verdacht stehen, aufgrund ihrer Lungengängigkeit oder gar Permeabilität durch die Zellmembran gesundheitsschädlich zu wirken. Auf diese Weise lassen sich mit partikulären Feststoffen gefüllte Polymer-Formteile in ihrem oberflächennahen Bereich mit einer Feinpartikelfraktion anreichern, ohne der Polymermatrix selbst Feinpartikel zusetzen zu müssen.

Mit "Ultraschall" im Sinne der Erfindung sind im übrigen Schallwellen mit einer Frequenz oberhalb des menschlichen Hörbereiches, d.h. oberhalb etwa 16 kHz, bis in den Bereich des Hyperschalls, also oberhalb etwa 10⁹ Hz, angesprochen.

Mit "wenigstens einem flüssigen bzw. viskosen, plastifizierten oder gelösten Polymer(system)" im Sinne der Erfindung sind jeweils reine oder Copolymere, Polymermischungen, Polymer-Blends oder Polymerlösungen sowie auch entsprechende Vorprodukte möglicher - sowohl vornehmlich thermoplastischer bzw. schmelzbarer als auch vornehmlich aushärtbarer, wie duroplastischer oder elastischer - Polymere in Form von Mono-, Di- und/oder Oligomeren einschließlich flüssiger oder viskoser Harze angesprochen. Selbstverständlich können diesen zusätzlich zu den partikulären Feststoffen in an sich bekannter Weise Additive, z.B. in gelöster oder suspendierter Form, zugesetzt sein.

In bevorzugter Ausführung ist vorgesehen, daß der Ultraschall derart in den flüssigen bzw. viskosen, plastifizierten oder gelösten Oberflächenbereich des Polymer-Formteils eingekoppelt wird, daß in der Polymermatrix Kavitationsbläschen erzeugt werden. Durch die Bildung von Kavitationsbläschen in der flüssigen oder viskosen Polymermatrix werden einerseits infolge der lokal auftretenden, sehr hohen Drucke und Temperaturen Agglomerationen von Feinpartikeln aufgelöst und gegebenenfalls auch größere Partikel zu kleineren zerteilt, andererseits wird die Beweglichkeit der Partikel in der Polymermatrix durch die bei der Bildung und beim Kollabieren der Kavitationsbläschen wirkenden Druckstöße erhöht, so daß eine nur sehr kurze Einwirkungszeit des Ultraschalls vonnöten ist, um eine feine Verteilung der Partikel im oberflächigen Bereich des Polymer-Formteils zu erzielen und z.B. eine Migration von Partikeln von weiter innen in den an Partikel verarmten Oberflächenbereich des Polymer-Formteils zu bewirken.

In weiterhin bevorzugter Ausführung ist vorgesehen, daß die Einkopplung von Ultraschall bei Umgebungsdruck oder bei einem demgegenüber niedrigeren Druck durchgeführt wird, da die Bildung von Kavitationsbläschen in einem vorgegebenen Medium infolge Ultraschall mit einer vorgegebenen Leistung um so ausgeprägter ist, je niedriger der Druck ist.

Das Polymer oder Polymersystem des Polymer-Formteils kann einerseits aus der Gruppe der thermoplastischen und/oder thermoelastischen Polymere, Polymer-Blends, Polymermischungen und Polymerlösungen (bzw. -suspensionen) gewählt werden, wobei es in diesem Fall vor der Einkopplung von Ultraschall zweckmäßig zumindest bereichsweise oberflächig plastifiziert bzw. geschmolzen wird.

Um eine Agglomeration der in den oberflächigen Bereich migrierten Partikel und/oder der durch Zerteilen größerer Partikel erhaltenen Feinpartikel und/oder um eine Reagglomeration von gelösten Agglomeraten zu verhindern und die erzeugte feindisperse Verteilung der Partikel im oberflächennahen Bereich des Polymer-Formteils aufrechtzuerhalten bzw. "einzufrieren", kann dabei in vorteilhafter Ausführung vorgesehen sein, daß das Polymer-Formteil - insbesondere unmittelbar - nach der Einkopplung von Ultraschall abgekühlt wird, so daß die plastifizierte Polymermatrix die Partikel umschließend erstarrt wird. Dies kann z.B. durch gasförmige oder flüssige Kühlmedien erreicht werden, wobei beispielsweise dann, wenn die erfindungsgemäße Ultraschallbehandlung an einem aus einem Extruder ausgebrachten Endlosstrang durchgeführt wird, dieser nach der Ultraschallbehandlung durch ein Wasserbad geführt werden kann.

Das Polymer oder Polymersystem des Polymer-Formteils kann andererseits auch aus der Gruppe der aushärtbaren bzw. vernetzbaren, duroplastischen und/oder elastischen Polymere, Polymer-Blends, Polymermischungen und Polymerlösungen (bzw. -suspensionen) gewählt werden, wobei die Einkopplung von Ultraschall in diesem Fall zweckmäßig in einen zumindest bereichsweise noch flüssigen bzw. viskosen Oberflächenbereich geschieht. Je nach Polymersystem kann es beispielsweise zweckmäßig sein, flüssige Vorprodukte (Prekursoren), wie Mono-, Di-, Oligomere etc., welche vernetzbar sind und zu dem fertigen Polymer ausgehärtet werden können, vorzuhärten (Reifung) und nach der Einkopplung von Ultraschall in den noch flüssigen oder viskosen Oberflächenbereich dann gänzlich auszuhärten.

Um wiederum eine Agglomeration der in den oberflächigen Bereich migrierten Partikel und/oder der durch Zerteilen grö-ßerer Partikel erhaltenen Feinpartikel und/oder um eine Reagglomeration von gelösten Agglomeraten zu verhindern und die erzeugte feindisperse Verteilung der Partikel im oberflächennahen Bereich des Polymer-Formteils aufrechtzuerhalten bzw. "einzufrieren", kann dabei in vorteilhafter Ausführung vorgesehen sein, daß das Polymer-Formteil - insbesondere unmittelbar - nach der Einkopplung von Ultraschall durch Erwärmen und/oder Bestrahlen ausgehärtet bzw. erstarrt wird. Die Erwärmung bzw. Bestrahlung sollte vorzugsweise kontaktfrei durchgeführt werden. Im Falle einer Bestrahlung kann vorzugsweise elektromagnetische Strahlung, insbesondere im Infrarotbereich (IR), im ultravioletten Bereich (UV) und/oder im Mikrowellenbereich (MW), oder Teilchenstrahlung, insbesondere Elektronenstrahlung (γ-Strahlung), eingesetzt werden.

Wie bereits erwähnt, sollte sowohl im Falle einer Erstarrung schmelzbarer Polymere durch Abkühlen als auch im Falle einer Erstarrung aushärtbarer Polymere durch Erwärmen/Bestrahlen nach der oberflächigen Ultraschallbehandlung diese Erstarrung möglichst schnell vonstatten gehen, um die erwünschten Modifikationen der Topologie der Oberfläche, die durch die Ultraschallwellen bzw. die durch diese bewirkte Kavitation erreicht worden sind, "einzufrieren". Dies kann insbesondere auch vorteilhaft sein, um bestimmte Oberflächeneffekte, wie selbstreinigende Eigenschaften oder optische Effekte zu erzielen.

Grundsätzlich ist es möglich, daß das Polymer oder Polymersystem aus der Gruppe der synthetischen Polymere, Polymer-Blends, Polymermischungen und/oder Polymerlösungen solcher Polymere, der natürlichen Polymere bzw. Biopolymere, Polymer-Blends, Polymermischungen und/oder Polymerlösungen solcher Polymere oder Polymer-Blends, Polymermischungen und/oder Polymerlösungen aus synthetischen und natürlichen Polymeren bzw. Biopolymeren gewählt wird.

Die Frequenz bzw. die Amplitude des eingesetzten Ultraschalls richtet sich ebenso wie die - zu einer Plastifizierung des Polymers hinreichende - oberflächige Temperatur des Polymer-Formteils, auf welches der Ultraschall einwirkt, vornehmlich nach dem jeweiligen Stoffsystem aus Polymer (bzw. Polymer-Blend, Polymerlösung etc.) und partikulärem Feststoff. Entsprechendes gilt für die Leistung des Ultraschalls, wobei es zum Erzielen des jeweils gewünschten, erfindungsgemäßen Effektes in vielen Fällen zweckmäßig ist, daß Ultraschall mit einer Leistung von etwa 0,1 W/cm² bis etwa 5000 W/cm², insbesondere von etwa 1 W/cm² bis etwa 1000 W/cm² oder auch von etwa 1 W/cm² bis etwa 500 W/cm², eingesetzt wird.

Wie bereits angedeutet, kann gemäß einer vorteilhaften Ausgestaltung vorgesehen sein, daß zur Einkopplung von Ultraschall in das Polymer-Formteil ein dieses zumindest bereichsweise benetzender Flüssigkeitsfilm eingesetzt wird, welcher in Ultraschallschwingungen versetzt wird. Der aufgebrachte Flüssigkeitsfilm kann dabei gegebenenfalls auch zum Beschichten des Formteils verwendet werden, indem er - z.B. in Form eines Lackes oder dergleichen - oberflächig auf dem Formteil zurückbleibt.

Alternativ oder zusätzlich kann vorgesehen sein, daß zur Einkopplung von Ultraschall in das Polymer-Formteil auf diesem abrollende Walzen eingesetzt werden, welche in Ultraschallschwingungen versetzt werden. Eine solche Vorgehensweise bietet sich insbesondere im Falle einer kontinuierlichen oder semikontinuierlichen Verfahrensführung an, bei welcher ein im wesentlichen strang- (z.B. profil-) oder platten- bzw. (z.B. im Falle der Herstellung von Polymer-Formteilen in Form von Folien oder Bögen, z.B. aus Polyolefinen, Papier etc.) bogenförmiges, beispielsweise endloses Polymer-Formteil in einer Extrudereinheit extrudiert und der Ultraschall nach Austritt des Polymer-Formteils aus der Extrudereinheit in den zumindest oberflächig noch flüssigen bzw. viskosen Endlosstrang eingekoppelt wird. Es ist beispielsweise möglich, bei der Polymerverarbeitung eingesetzte Kalandrierwalzen unmittelbar mit Ultraschall anzuregen. Ist die Polymermatrix in Oberflächennähe (noch) hinreichend flüssig bzw. viskos, kann gegebenenfalls auf die Zugabe eines fluiden Mediums als Schallkoppler auch im Falle einer Verwendung von starren, mit Ultraschall angeregten Oberflächen, wie Platten, Düsen, Rohren etc., verzichtet werden.

Die auf dem Polymer-Formteil abrollenden, in Ultraschallschwingungen versetzten Walzen können unter eine Vorspannung gegen den Endlosstrang oder -bogen gesetzt werden, so daß der Endlosstrang oder -bogen unter Erhalt des gewünschten Profils zugleich kalibriert wird.

Eine bevorzugte Ausführungsvariante des erfindungsgemäßen Verfahrens kann darin bestehen, daß zumindest einige partikulären Feststoffe vor der Einkopplung von Ultraschall oberflächig auf den zumindest oberflächig noch flüssigen bzw. viskosen, plastifizierten oder gelösten Endlosstrang oder -bogen aufgebracht und sodann durch die Einkopplung von Ultraschall oberflächig in den Endlosstrang oder -bogen eindispergiert werden. Das Polymer selbst kann dabei zum Zeitpunkt des Auf- bzw. Einbringens dieser partikulären Feststoffe bereits mit demselben und/oder anderen Partikeln versetzt sein, oder es kann auch noch gänzlich frei von Partikeln sein. In jedem Fall können die partikulären Feststoffe in Pulverform oder dispergiert in einem Trägerfluid oder in einem anderen oder in demselben Polymer in flüssiger bzw. viskoser Form auf das insbesondere frisch extrudierte Formteil aufgebracht und anschließend durch die Ultraschallbehandlung in die Oberfläche des Formteils integriert werden. Eine solche Vorgehensweise bietet sich z.B. bei lediglich im Oberflächenbereich des Formteils gewünschten, verhältnismäßig teuren Partikeln, wie Nanopartikeln und/oder Partikeln aus teuren Ausgangsmaterialien an, da diese auch ausschließlich vor der Ultraschallbehandlung oberflächig auf das Polymer-Formteil aufgebracht werden können, so daß sie im Oberflächenbereich des fertigen Formteils in feiner Verteilung vorliegen, und die gesamte Polymermatrix des Formteils nicht notwendigerweise zusätzlich im zentralen Bereich mit solchen Partikeln versetzt sein muß. Es können folglich nur wenige Partikel in feiner Verteilung genau dort eingesetzt werden, wo sie ihre jeweilige Wirkung entfalten (nämlich im oberflächigen Bereich des Polymer-Formteils), was mit einer erheblichen Kostenersparnis einhergeht.

Sofern es für den jeweiligen Anwendungszweck des Polymer-Formteils ausreichend ist, daß das Polymer-Formteil nur in einer oberflächigen Schicht mit bestimmten Partikeln versetzt ist, besteht ferner die Möglichkeit, daß das Polymer-Formteil koextrudiert wird, wobei nur für einen oberflächigen Bereich desselben ein mit partikulären Feststoffen versetztes Polymer eingesetzt wird, oder für einen oberflächigen Bereich des Polymer-Formteils wird ein mit anderen partikulären Feststoffen und/oder mit partikulären Feststoffen anderer Partikelgrößenfraktionen versetztes Polymer eingesetzt als für einen inneren Bereich des Polymer-Formteils. Dieser Innen- bzw. Kernbereich des Formteils kann folglich z.B. aus demselben oder einem oder mehreren anderen Polymeren bestehen, welche nicht oder mit weniger und/oder mit anderen partikulären Feststoffen versetzt sind. Desgleichen gibt das Verfahren auch die Möglichkeit einer Koextrusion dahingehend, daß das mit partikulären Feststoffen versetzte Polymer auf einen etwa stabförmigen Körper aufextrudiert und das noch plastifizierten oder unter Einwirkung von Wärme erneut plastifizierte Polymer mit den Partikeln oberflächig mit Ultraschall behandelt wird.

Das erfindungsgemäße Verfahren läßt sich beispielsweise mit einer Vorrichtung zur Oberflächenbehandlung von Polymer-Formteilen aus wenigstens einem zumindest in einem oberflächennahen Bereich mit partikulären Feststoffen versetzten Polymer oder Polymersystem durchführen, wobei die Vorrichtung wenigstens eine in Ultraschallschwingungen versetzbare Walze umfaßt, welche mit dem Polymer-Formteil oberflächig in Rollkontakt bringbar ist, um in einen oberflächigen, flüssigen bzw. viskosen, plastifizierten oder gelösten Bereich des Polymer-Formteils Ultraschall einzukoppeln.

Um insbesondere im Falle des Einsatzes schmelzbarer, thermoplastischer oder thermoelastischer Polymere für eine oberflächige Plastifizierung des Polymer-Formteils in einen schmelzflüssigen oder zumindest viskosen Zustand zu sorgen, ist die Walze vorzugsweise beheizbar und/oder der Walze ist eine Heizeinrichtung zugeordnet, welche das Polymer-Formteil vor Inkontakttreten mit der in Ultraschallschwingungen versetzbaren Walze oberflächig zu plastifizieren vermag.

Hierfür kommen beispielsweise Heißgas- bzw. Heißluftgebläse, Strahlungseinheiten, wie Infrarot-, Mikrowellenstrahler oder dergleichen, Kontakterwärmungseinheiten etc. in Frage.

Die Walze kann ferner vorzugsweise mit einer einstellbaren. Kraft gegen die Oberfläche des Polymer-Formteils anpreßbar sein, um insbesondere ein frisch extrudiertes, strangförmiges Formteil zu kalibrieren. Hierzu kann die Lauffläche der Walze(n) eine bezüglich des gewünschten Profils des Formteils komplementäre Profilierung aufweisen.

Überdies ist es zweckmäßig, wenn wenigstens zwei entgegengesetzte, das Formteil zwischen sich aufnehmende Walzen vorgesehen sind, von welchen zumindest eine, vorzugsweise beide, mit Ultraschall beaufschlagbar ist bzw. sind. Alternativ oder zusätzlich können selbstverständlich mehrere solcher Walzen hintereinander angeordnet sein, um die Einwirkungsdauer des Ultraschalls bei konstantem Vorschub des Polymer-Formteils zu erhöhen und/oder insbesondere bei Formteilen in Form von dünnen Platten, Folien oder Bögen eine zusätzliche Führungsfunktion zu übernehmen. Die Walze(n) kann/können des weiteren passiv oder insbesondere auch mit einer einstellbaren Geschwindigkeit angetrieben sein.

Um insbesondere im Falle des Einsatzes schmelzbarer, thermoplastischer oder thermoelastischer Polymere für eine schnelle Erstarrung des mit Ultraschall behandelten Polymer-Formteils mit den oberflächig fein verteilten, partikulären Feststoffen zu sorgen, kann der Walze eine Kühleinrichtung nachgeordnet sein, welche beispielsweise von einem Kaltluftgebläse, einem Wasserbad oder dergleichen gebildet sein kann. Ist hingegen der Einsatz aushärtbarer, duroplastischer oder elastischer Polymere vorgesehene, so kann der/den Walze(n) alternativ oder zusätzlich eine Heizeinrichtung, wie ein Heißgasgebläse oder eine Kontakterwärmungseinheit, oder eine Strahlungseinheit, wie ein Infrarot- (IR), Ultraviolett- (UV) oder Mikrowellenstrahler (MW), nachgeordnet sein.

Ferner kann vorgesehen sein, daß der/den Walze(n) eine Dosiereinrichtung zum oberflächigen Aufbringen von partikulären Feststoffen auf das Polymer-Formteil vorgeordnet ist, welche z.B. zum Aufbringen der Partikel in fester oder in in einem Fluid eindispergierter Form ausgebildet sein kann.

Schließlich kann die Walze der Düse einer Extrudereinheit nachgeordnet sein, so daß im Falle des Einsatzes schmelzbarer, thermoplastischer oder thermoelastischer Polymere eine erneute Plastifizierung des zumindest oberflächig noch nicht gänzlich erstarrten Polymers anläßlich der Einkopplung von Ultraschall entbehrlich sein kann oder im Falle des Einsatzes aushärtbarer, duroplastischer oder elastischer Polymere eine unmittelbar an die Formgebung und gegebenenfalls Vorhärtung anschließende Oberflächenbehandlung möglich ist, auf welche die Endhärtung folgt.

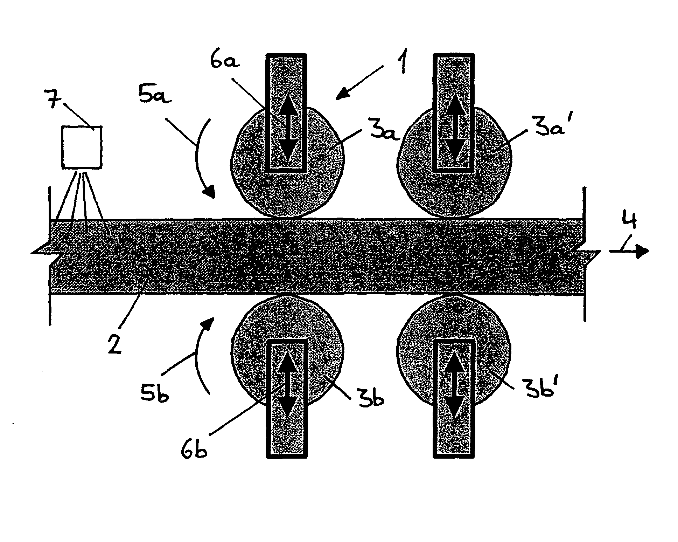

Nachstehend ist die Erfindung anhand eines Ausführungsbeispiels unter Bezugnahme auf die Zeichnung näher erläutert. Dabei zeigt die einzige Figur
eine schematische Seitenansicht einer Vorrichtung zur Oberflächenbehandlung von Polymer-Formteilen aus zumindest in einem oberflächennahen Bereich mit partikulären Feststoffen versetzten Polymeren.

In der Figur ist eine Ausführungsform einer erinfungsgemäß einsetzbaren Vorrichtung 1 zur Oberflächenbehandlung von Polymer-Formteilen 2 wiedergegeben, welche z.B. aus wenigstens einem plastifizierbaren, thermoplastischen und/oder thermoelastischen Polymer, einem solchen Polymer-Blend bzw. Polymermischung oder Polymerlösung bzw. -suspension bestehen und zumindest in ihrem oberflächennahen Bereich mit partikulären Feststoffen versetzt sind. Die Vorrichtung 1. umfaßt beim vorliegenden Ausführungsbeispiel ein Walzensystem mit zwei jeweils an entgegengesetzten Flächen des Formteils 1 in Rollkontakt stehende Walzenpaaren 3a, 3b; 3a', 3b', von welchen wenigstens eines, vorzugsweise beide, mittels Sonotroden (nicht gezeigt) in Ultraschallschwingungen versetzbar sind. Das Formteil 2 ist im vorliegenden Fall von einem platten- oder profilartigen Endlosstrang gebildet, welcher in Richtung des Pfeils 4 mit einer vorgegebenen Vorschubgeschwindigkeit zwischen den Walzen 3a, 3b; 3a', 3b' hindurch bewegt wird. Die Vorschubgeschwindigkeit richtet sich dabei nach der für den jeweiligen Anwendungsfall erforderlichen Einwirkungsdauer des Ultraschalls auf die Oberflächen des Formteils 2, wobei selbstverständlich auch zusätzliche, in Vorschubrichtung 4 des Formteils 2 hintereinander angeordnete Walzen vorgesehen sein können. Die Walzen 3a, 3b; 3a', 3b' können passiv oder in Richtung der Pfeile 5a, 5b mit einer dem Vorschub 4 entsprechenden Umfangsgeschwindigkeit angetrieben sein.

Die Vorrichtung 1 mit der mit Ultraschall beaufschlagbaren Anordnung von Walzen 3a, 3b; 3a', 3b' kann insbesondere einer nicht näher wiedergegebenen Plastifiziereinheit, wie einem Extruder, nachgeordnet sein, mittels dessen das Polymer-Formteil 2 extrudiert wird. In diesem Fall kann eine den Walzen 3a, 3b; 3a', 3b' vorgeordnete Heizeinrichtung zur oberflächigen Plastifizierung des Formteils 2 entbehrlich sein, sofern dafür Sorge getragen wird, daß sich die Polymermatrix des Formteils 2 zumindest im Bereich seiner Oberfläche noch in einem plastischen Zustand befindet, wenn sie mit den Walzen 3a, 3b; 3a', 3b' in Rollkontakt tritt. Andernfalls weist die Vorrichtung zweckmäßig eine den Walzen 3a, 3b; 3a', 3b' vorgeordnete Heizeinrichtung zum oberflächigen Plastifizieren des Formteils 2 auf (nicht gezeigt) und/oder die Walzen 3a, 3b; 3a', 3b' selbst bzw. deren Umfangs- oder Laufflächen sind beheizbar, wobei es alternativ auch denkbar ist, daß die Leistung des Ultraschalls so gewählt wird, daß das Formteil 2 allein durch die Einkopplung des Ultraschalls oberflächig plastifiziert wird.

Wenigstens ein Walzenpaar der Walzen 3a, 3b; 3a', 3b' ist ferner mit einer Normalkraft in Richtung des Polymer-Formteils 2 gegen dessen Oberfläche anpreßbar, wie es durch die Pfeile 6a, 6b angedeutet ist. Die Walzen 3a, 3b; 3a', 3b' können ferner an ihrer Umfangsfläche mit einer geeigneten Profilierung oder auch glatt ausgebildet sein, um das frisch extrudierte Polymer-Formteil 2 zugleich zu kalibrieren. Zusätzlich kann den Walzen 3a, 3b eine Kühleinrichtung (nicht gezeigt) nachgeordnet sein, um für eine schnelle Erstarrung des oberflächig noch plastifizierten Formteils 2 zu sorgen. Im Falle der Oberflächenbehandlung von zumindest oberflächig noch flüssigen bzw. viskosen, aushärtbaren Polymeren, wie Duroplasten oder Elastomeren, ist den Walzen 3a, 3b; 3a', 3b' vorzugsweise zu demselben Zweck eine Heizeinrichtung und/oder Strahlungseinheit (ebenfalls nicht gezeigt) nachgeordnet.

Beim vorliegenden Ausführungsbeispiel ist den Walzen 3a, 3b; 3a', 3b' überdies eine Dosiereinrichtung 7 vorgeordnet, welche dazu dienen kann, feinpartikuläre Feststoffe in fester oder in in einem Trägerfluid eindispergierter Form auf die Oberfläche des Polymer-Formteils 2 aufzubringen und anschließend mittels der mit Ultraschall angeregten Walzen 3a, 3b; 3a', 3b' oberflächig in das Formteil 2 zu integrieren.

Das fertige Formteil 2, z.B. in Form von Platten, Profilen, Strängen, Folien, Bögen etc., kann anschließend entsprechend abgelängt und seiner ihm zugedachten Verwendung, z.B. für Kraftfahrzeug- oder Fahrzeuginnenausstattungsteile oder für beliebige andere Einsatzzwecke, insbesondere der in der Beschreibungseinleitung genannten Art, oder in Form eines Halbzeugs weiterverarbeitet werden, z.B. durch Hinterspritzen, Umformen (z.B. Thermoformen) etc.

Nachstehend ist die Erfindung anhand eines Ausführungsbeispiels näher erläutert, welches den speziellen Einsatz des erfindungsgemäßen Verfahrens in der Papierindustrie betrifft. Gleichwohl sind selbstverständlich, wie bereits erwähnt, auch gänzlich andere Anwendungsgebiete vorgesehen.

### Ausführungsbeispiel

Bei der Papierherstellung in der Papiermaschine kann die vornehmlich aus einer wäßrigen Lösung bzw. Suspension auf der Basis von Cellulose gebildete Papierbahn nach Zugabe von feinpartikulären Papierhilfsmitteln, wie Füllstoffen (z.B. Kaolin, Kreide, Titandioxid zur Verbesserung der Glätte, Bedruckbarkeit und Opazität sowie zur Oberflächenvergütung), Farbpigmenten, Bindemitteln (z.B. Stärke, Casein und andere Proteine, Kunststoffdispersionen, Harzleime zur Verfestigung des Fasergefüges, Bindung von Füllstoffen und Pigmenten, Erhöhung der Wasserfestigkeit und zur verbesserten Beschreib- und Bedruckbarkeit), optischen Aufhellern (erhöhter Weißgrand), Konservierungsmitteln, Antiblockmitteln, Antistatika, Flammschutzmitteln, Hydrophobierungsmitteln etc., und Durchmischung bzw. Homogenisierung der Cellulosematrix mit den feinpartikulären Papierhilfsmitteln oder auch lediglich Aufbringen letzterer auf die Oberfläche der frisch erzeugten Papierbahn in der in der Zeichnung wiedergegebenen Vorrichtung über deren Walzen 3a, 3b; 3a', 3b' mit Ultraschall behandelt werden (z.B. in der Trocken- und Veredelungspartie der Papiermaschine), um eine hohe Partikelkonzentration in feiner Verteilung zumindest in den oberflächennahen Randbereichen der Papierbahn zu bewirken. Zugleich könnte durch die Ultraschallbehandlung eine zusätzliche Entwässerung (z.B. in der Sieb-, Pressen- und Trockenpartie der Papiermaschine) und damit eine höhere mittlere Feststoffvolumenkonzentration sowie eine höhere Feststoffvolumenkonzentration an der Oberfläche erreicht werden.

## Patentansprüche

1. Verfahren zur Oberflächenbehandlung von Polymer-Formteilen aus wenigstens einem zumindest in einem oberflächennahen Bereich mit partikulären Feststoffen versetzten Polymer oder Polymersystem, **dadurch gekennzeichnet, daß** in wenigstens einen flüssigen bzw. viskosen, plastifizierten oder gelösten Oberflächenbereich des Polymer-Formteils Ultraschall mit einer hinreichenden Energie eingekoppelt wird, um einen Stofftransport zumindest einiger Partikel in Richtung der Oberfläche des Polymer-Formteils zu induzieren und/oder Agglomerationen kleinerer Partikel zu lösen und/oder größere Partikel unter Bildung von kleineren Partikeln zu zerteilen, wobei der flüssige bzw. viskose, plastifizierte oder gelöste Oberflächenbereich des Polymer-Formteils nach der Einkopplung von Ultraschall erstarrt wird.

2. Verfahren nach Anspruch 1, **dadurch gekennzeichnet, daß** der Ultraschall derart in den flüssigen bzw. viskosen, plastifizierten oder gelösten Oberflächenbereich des Polymer-Formteils eingekoppelt wird, daß in der Polymermatrix Kavitationsbläschen erzeugt werden.

3. Verfahren nach Anspruch 1 oder 2, **dadurch gekennzeichnet, daß** die Einkopplung von Ultraschall bei Umgebungsdruck oder bei einem demgegenüber niedrigeren Druck durchgeführt wird.

4. Verfahren nach einem der Ansprüche 1 bis 3, **dadurch gekennzeichnet, daß** das Polymer oder Polymersystem des Polymer-Formteils aus der Gruppe der schmelzbaren, thermoplastischen und/oder thermoelastischen Polymere, Polymer-Blends, Polymermischungen und Polymerlösungen gewählt und vor der Einkopplung von Ultraschall zumindest bereichsweise oberflächig plastifiziert wird.

5. Verfahren nach Anspruch 4, **dadurch gekennzeichnet, daß** das Polymer-Formteil, insbesondere unmittelbar, nach der Einkopplung von Ultraschall durch Abkühlen erstarrt wird.

6. Verfahren nach einem der Ansprüche 1 bis 3, **dadurch gekennzeichnet, daß** das Polymer oder Polymersystem des Polymer-Formteils aus der Gruppe der aushärtbaren, duroplastischen und/oder elastischen Polymere, Polymer-Blends, Polymermischungen und Polymerlösungen gewählt wird und die Einkopplung von Ultraschall in einen zumindest bereichsweise noch flüssigen bzw. viskosen Oberflächenbereich geschieht.

7. Verfahren nach Anspruch 6, **dadurch gekennzeichnet, daß** das Polymer-Formteil, insbesondere unmittelbar, nach der Einkopplung von Ultraschall durch Erwärmen und/oder Bestrahlen ausgehärtet bzw. erstarrt wird.

8. Verfahren nach Anspruch 7, **dadurch gekennzeichnet, daß** elektromagnetische Strahlung, insbesondere im Infrarotbereich (IR), im ultravioletten Bereich (UV) und/oder im Mikrowellenbereich (MW), oder Teilchenstrahlung, insbesondere Elektronenstrahlung (y-Strahlung), eingesetzt wird.

9. Verfahren nach einem der Ansprüche 1 bis 8, **dadurch gekennzeichnet, daß** das Polymer oder Polymersystem des Polymer-Formteils aus der Gruppe der synthetischen Polymere, Polymer-Blends, Polymermischungen und/oder Polymerlösungen solcher Polymere, der natürlichen Polymere bzw. Biopolymere, Polymer-Blends, Polymermischungen und/oder Polymerlösungen solcher Polymere oder Polymer-Blends, Polymermischungen und/oder Polymerlösungen aus synthetischen und natürlichen Polymeren bzw. Biopolymeren gewählt wird.

10. Verfahren nach einem der Ansprüche 1 bis 9, **dadurch gekennzeichnet, daß** Ultraschall mit einer Leistung von 0,1 bis 5000 W/cm², insbesondere von 1 bis 1000 W/cm², eingesetzt wird.

11. Verfahren nach einem der Ansprüche 1 bis 10, **dadurch gekennzeichnet, daß** zur Einkopplung von Ultraschall in das Polymer-Formteil ein dieses zumindest bereichsweise benetzender Flüssigkeitsfilm eingesetzt wird, welcher in Ultraschallschwingungen versetzt wird.

12. Verfahren nach einem der Ansprüche 1 bis 11, **dadurch gekennzeichnet, daß** zur Einkopplung von Ultraschall in das Polymer-Formteil auf diesem abrollende Walzen eingesetzt werden, welche in Ultraschallschwingungen versetzt werden.

13. Verfahren nach einem der Ansprüche 1 bis 12, **dadurch gekennzeichnet, daß** ein im wesentlichen strang- oder bogenförmiges Polymer-Formteil in einer Extrudereinheit extrudiert und der Ultraschall nach Austritt des Polymer-Formteils aus der Extrudereinheit in den oberflächig zumindest bereichsweise noch flüssigen bzw. viskosen Endlosstrang eingekoppelt wird.

14. Verfahren nach Anspruch 12 oder 13, **dadurch gekennzeichnet, daß** die auf dem Polymer-Formteil abrollenden, in Ultraschallschwingungen versetzten Walzen unter eine Vorspannung gegen den Endlosstrang oder -bogen gesetzt werden, so daß der Endlosstrang oder -bogen zugleich kalibriert wird.

15. Verfahren nach Anspruch 13 oder 14, **dadurch gekennzeichnet, daß** zumindest einige partikulären Feststoffe vor der Einkopplung von Ultraschall oberflächig auf den zumindest oberflächig noch flüssigen bzw. viskosen, plastifizierten oder gelösten Endlosstrang oder -bogen aufgebracht und sodann durch die Einkopplung von Ultraschall oberflächig in den Endlosstrang oder -bogen eindispergiert werden.

16. Verfahren nach einem der Ansprüche 13 bis 15, **dadurch gekennzeichnet, daß** das Polymer-Formteil koextrudiert wird, wobei nur für einen oberflächigen Bereich desselben ein mit partikulären Feststoffen versetztes Polymer eingesetzt wird.

17. Verfahren nach einem der Ansprüche 13 bis 16, **dadurch gekennzeichnet, daß** das Polymer-Formteil koextrudiert wird, wobei für einen oberflächigen Bereich desselben ein anderes Polymer und/oder ein mit anderen partikulären Feststoffen und/oder mit partikulären Feststoffen anderer Partikelgrößenfraktionen versetztes Polymer eingesetzt wird als für einen inneren Bereich des Polymer-Formteils.
